# EUROPÄISCHE PATENTSCHRIFT

(11) **EP 3 824 561 B1**
(45) Veröffentlichungstag und Bekanntmachung des Hinweises auf die Patenterteilung: **30.07.2025**
(21) Anmeldenummer: 19736683.4
(22) Anmeldetag: 04.07.2019
(51) Int. Cl.: H04B 5/26, G06K 7/00, H04B 5/48

(54) **VORRICHTUNG FÜR EIN FAHRZEUG ZUR KONTAKTLOSEN DATENÜBERTRAGUNG**
APPARATUS FOR A VEHICLE FOR CONTACTLESS DATA TRANSMISSION
DISPOSITIF POUR UN VÉHICULE DESTINÉ À TRANSMETTRE DES DONNÉES SANS CONTACT

(30) Priorität: 18.07.2018 DE 102018117410
(43) Veröffentlichungstag der Anmeldung: 26.05.2021
(73) Patentinhaber: Huf Hülsbeck & Fürst GmbH & Co. KG, 42551 Velbert (DE)
(72) Erfinder: SIEG, Berthold, 46240 Bottrop (DE); WICKERT, Pascal, 46049 Oberhausen (DE)
(74) Vertreter: Bals & Vogel Patentanwälte PartGmbB
(86) Internationale Anmeldenummer: PCT/EP2019/067960
(87) Internationale Veröffentlichungsnummer: WO 2020/016021

(56) Entgegenhaltungen:
- US-A1- 2006 238 301
- US-A1- 2012 134 444

## Beschreibung

Die vorliegende Erfindung betrifft eine Vorrichtung für ein Fahrzeug zur kontaktlosen Datenübertragung.

Es ist aus dem Stand der Technik bekannt, dass bei Vorrichtungen zur kontaktlosen Datenübertragung, insbesondere NFC-Schnittstellen, eine Transceiver-Schaltung genutzt wird. Hierzu kann zum Beispiel ein integrierter Schaltkreis genutzt werden, um über ein an eine Antenne ausgesendetes Signal - über eine erste Verschaltung - Informationen kontaktlos auszusenden. Über eine zweite Verschaltung kann dieser integrierte Schaltkreis Signale von der Antenne empfangen. Zwischen dem integrierten Schaltkreis und der Antenne kann zudem eine Filterschaltung vorgesehen sein, um das gesendete und/oder empfangene Signal hinsichtlich der genutzten Kommunikationsfrequenz zu filtern. Üblicherweise erfolgt dabei ein Abgriff der Antennenspannung innerhalb dieser Filterschaltung. Bekannte Lösungen können dabei den Nachteil haben, dass auf Grund der verringerten Antennenspannung, welche innerhalb der Filterschaltung abgegriffen wird, und der entsprechend hierzu verwendeten niedrigeren Impedanzen zur Auskopplung ein höherer Verluststrom auftritt. Ein weiterer Nachteil kann sein, dass zur Bereitstellung der Impedanzen ein technisch höherer Aufwand notwendig ist.

Aus der US 2012 / 134444 A1 ist eine Vorrichtung zur Nahfeldkommunikation bekannt, mit einem elektronischen Verarbeitungsmittel für die Datenübertragung bekannt. In einem Empfangspfad der Vorrichtung sind zwei Widerstandselemente als Spannungsteile vorgesehen, um das Empfangssignal für den Empfangsanschluss anzusprechen.

Es ist eine Aufgabe der vorliegenden Erfindung, die voranstehend beschriebenen Nachteile zumindest teilweise zu beheben. Insbesondere ist es Aufgabe der vorliegenden Erfindung, eine verbesserte und/oder in der Herstellung kostengünstigere und/oder energiesparende Lösung für eine Vorrichtung zur kontaktlosen Datenübertragung, insbesondere zur Auskopplung der Antennenspannung, bereitzustellen.

Die voranstehende Aufgabe wird gelöst durch eine Vorrichtung mit den Merkmalen des unabhängigen Vorrichtungsanspruchs. Weitere Merkmale und Details der Erfindung ergeben sich aus den jeweiligen Unteransprüchen, der Beschreibung und den Zeichnungen.

Die Aufgabe wird insbesondere gelöst durch eine Vorrichtung, vorzugsweise elektrische oder elektronische Schaltungsanordnung, für ein Fahrzeug zur kontaktlosen Datenübertragung zwischen dem Fahrzeug und einem mobilen Gerät, vorzugsweise zur NFC-Kommunikation des Fahrzeuges mit einem mobilen Identifikationsgeber, aufweisend:
- wenigstens (oder genau) ein elektronisches Verarbeitungsmittel, wie ein integrierter Schaltkreis und/oder ein Mikrocontroller und/oder dergleichen, für die Datenübertragung,
- wenigstens einen (oder genau zwei) Sendepfad(e), vorzugsweise jeweils als ein elektrischer Strompfad, welche(r) einen jeweiligen Sendeanschluss des Verarbeitungsmittels mit einer Antenne verbindet, um zumindest ein Sendesignal bereitzustellen, insbesondere zu erzeugen und/oder über den Sendepfad zu übertragen,
- wenigstens einen (oder genau zwei) Empfangspfad(e), vorzugsweise jeweils als ein elektrischer Strompfad, welche(r) die Antenne mit einem jeweiligen Empfangsanschluss des Verarbeitungsmittels verbindet, um zumindest ein Empfangssignal zu erfassen und/oder hierzu über den Empfangspfad zu übertragen.

So kann zum Beispiel ein (einziger) Sendepfad die Antenne mit einem (einzigen) Sendeanschluss des Verarbeitungsmittels verbinden und ein (einziger) Empfangspfad die Antenne mit einem (einzigen) Empfangsanschluss des Verarbeitungsmittels verbinden. Auch kann ggf. ein erster Sendepfad die Antenne mit einem ersten Sendeanschluss des Verarbeitungsmittels verbinden und ein zweiter Sendepfad die Antenne mit einem zweiten Sendeanschluss des Verarbeitungsmittels verbinden. Ferner kann auch ein erster Empfangspfad die Antenne mit einem ersten Empfangsanschluss des Verarbeitungsmittels verbinden und ein zweiter Empfangspfad die Antenne mit einem zweiten Empfangsanschluss des Verarbeitungsmittels verbinden.

Diese Verbindung(en) kann/können dabei als elektrische Verschaltung und/oder elektrische Verbindung verstanden werden, welche zum Beispiel dauerhaft hergestellt ist (das heißt dauerhaft elektrisch leitend und nicht unterbrochen) oder nur zeitweise zum Beispiel durch elektrische Schalter hergestellt ist. Unter Strompfade werden dabei insbesondere Stromzweige einer Schaltungstopologie verstanden, welche über deren Erstreckung ggf. keinerlei Knoten oder Abzweigungen für den Strom aufweisen. Ein Stromzweig und/oder der wenigstens eine Empfangspfad können dabei auch mit weiteren Stromzweigen und/oder mit dem wenigstens einen Sendepfad verbunden sein, um eine Verschaltung zur Auskopplung einer Antennenspannung bereitzustellen.

Vorteilhaft ist es zudem, wenn das Fahrzeug als ein Kraftfahrzeug, insbesondere als ein Hybridfahrzeug oder als ein Elektrofahrzeug ausgebildet ist, vorzugsweise mit einem Hochvolt-Bordnetz und/oder einem Elektromotor. Außerdem kann es möglich sein, dass das Fahrzeug als ein Brennstoffzellenfahrzeug und/oder Personenkraftfahrzeug und/oder semiautonomes oder autonomes Fahrzeug ausgebildet ist. Vorteilhafterweise weist das Fahrzeug ein Sicherheitssystem auf, welches zum Beispiel durch eine Kommunikation mit einem mobilen Gerät, wie einem Identifikationsgeber (ID-Geber) oder einem Smartphone, eine Authentifizierung ermöglicht. In Abhängigkeit von der Kommunikation und/oder der Authentifizierung kann wenigstens eine Funktion des Fahrzeuges aktiviert werden. Falls hierzu die Authentifizierung des mobilen Geräts notwendig ist, kann es sich bei der Funktion um eine sicherheitsrelevante Funktion handeln, wie ein Entriegeln des Fahrzeuges oder eine Freigabe eines Motorstarts. Somit kann das Sicherheitssystem auch als ein passives Zugangssystem ausgebildet sein, welches ohne aktive manuelle Betätigung des mobilen Geräts bzw. ID-Gebers die Authentifizierung und/oder die Aktivierung der Funktion bei Detektion der Annäherung des mobilen Geräts bzw. ID-Gebers an das Fahrzeug initiiert. Hierzu wird bspw. wiederholt ein Wecksignal durch das Sicherheitssystem ausgesendet, welches durch das mobile Gerät bzw. den ID-Geber bei der Annäherung empfangen werden kann, und dann die Authentifizierung auslöst. Auch kann die Funktion eine Aktivierung einer Fahrzeugbeleuchtung und/oder ein Betätigen (Öffnen und/oder Schließen) einer Klappe (zum Beispiel Front- oder Heck- oder Seitenklappe bzw. -tür) betreffen. Bspw. wird automatisch bei der Detektion der Annäherung die Fahrzeugbeleuchtung aktiviert und/oder bei der Detektion einer Geste eines Benutzers die Klappe betätigt.

Die Kommunikation kann ferner zum Beispiel über die kontaktlose Datenübertragung erfolgen. Hierzu kann zum Beispiel das Fahrzeug die erfindungsgemäße Vorrichtung aufweisen, um eine induktive Kopplung oder dergleichen mit einer korrespondierenden Kommunikationsschnittstelle des mobilen Geräts durchzuführen. Auf diese Weise können zum Beispiel Authentifizierungsdaten mittels der kontaktlosen Datenübertragung übertragen werden. Auch kann die kontaktlose Datenübertragung ggf. dazu dienen, die Funktion bei dem Fahrzeug zu aktivieren. Insbesondere handelt es sich dabei um eine Datenübertragung mittels NFC (Near Field Communication) oder RFID (Radio Frequency Identification). Ferner kann die Kommunikation als uni- oder bidirektionale Kommunikation ausgeführt sein.

Es kann möglich sein, dass die erfindungsgemäße Vorrichtung in einen Türgriff des Fahrzeuges integriert ist. Bspw. kann die Datenübertragung dazu genutzt werden, um eine Entriegelung oder ein Öffnen einer Tür (zum Beispiel mit dem Türgriff) am Fahrzeug zu bewirken. Hierzu kann ein mobiles Gerät zum Beispiel an den Türgriff gehalten werden, um die Datenübertragung durchzuführen.

Es ist insbesondere vorgesehen, dass jeweils bei dem Empfangspfad (das heißt bei jedem der Empfangspfade) wenigstens zwei (oder genau zwei) Widerstandselemente vorgesehen sind, zum Beispiel zumindest teilweise auch in einem mit dem Empfangspfad verbundenen Stromzweig, um das Empfangssignal am Empfangsanschluss einzustellen. Dies hat den Vorteil, dass eine zuverlässige und kostengünstige Anordnung genutzt werden kann, um das Empfangssignal zum Beispiel quantitativ einzustellen. Insbesondere wird dabei ein elektrischer Spannungswert des Empfangssignals am Empfangsanschluss eingestellt. In anderen Worten kann durch die wenigstens zwei Widerstandselemente eine Anordnung zur Spannungseinstellung, vorzugsweise ein Spannungsteiler, ausgebildet werden. Darüber hinaus kann die erfindungsgemäße Vorrichtung den Vorteil bieten, dass ein stromsparender Betrieb ermöglicht wird. Dabei kann wenigstens einer der Widerstandselemente in dem Empfangspfad integriert sein (also gegebenenfalls in Reihe mit weiteren Bauelementen im Empfangspfad verschaltet sein), und/oder wenigstens einer der Widerstandselemente in einen Strompfad integriert sein, welcher mit dem Empfangspfad über einen Knotenpunkt verbunden ist.

Es kann zum Beispiel ein erstes und zweites Widerstandselement bei einem (ersten) Empfangspfad und gegebenenfalls ein (weiteres) erstes und zweites Widerstandselement bei einem zweiten Empfangspfad vorgesehen sein. Die jeweiligen ersten und zweiten Widerstandselemente können miteinander und/oder mit dem entsprechenden Empfangspfad und/oder mit einem jeweiligen festen Potential elektrisch (ggf. direkt) verbunden sein.

Die Widerstandselemente können zum Beispiel als elektrische Widerstände ausgebildet sein, um einen (ohmschen) Spannungsteiler zur (ohmschen) Auskopplung der Antennenspannung (also insbesondere des Empfangssignals) zu ermöglichen. Es kann zum Beispiel ein Spannungsteiler aus zwei Widerstandselementen bei jedem der Empfangspfade vorgesehen sein. In anderen Worten können zum Beispiel wenigstens oder genau zwei Widerstandselemente pro Empfangspfad vorgesehen sein.

Vorteilhafterweise ist bei der Erfindung vorgesehen, dass einer der Widerstandselemente des jeweiligen Empfangspfads direkt mit der Antenne (insbesondere elektrisch) verbunden ist, um das Empfangssignal direkt an der Antenne abzugreifen. Hierzu kann das Widerstandselement beispielsweise elektrisch mit einem Knotenpunkt verbunden sein, welcher mit der Antenne und/oder mit dem Sendepfad verbunden ist. Da der Abgriff direkt an der Antenne erfolgen kann, kann die abgegriffene Antennenspannung (das heißt das Empfangssignal) relativ hoch sein. Beispielsweise beträgt die abgegriffene Antennenspannung wenigstens 10 Volt oder wenigstens 20 Volt oder wenigstens 30 Volt. Entsprechend können die Widerstandselemente relativ hochohmig sein, was den Vorteil hat, dass ein Verluststrom gegenüber einer herkömmlichen Lösung reduziert werden kann.

Gemäß der beanspruchten Erfindung ist vorgesehen, dass wenigstens einer der Widerstandselemente gemeinsam mit dem Verarbeitungsmittel, vorzugsweise einer Kapazität am jeweiligen Empfangsanschluss (insbesondere eine sogenannte Pin-Kapazität), einen Tiefpassfilter ausbildet. Die Kapazität wird insbesondere durch das Verarbeitungsmittel am Empfangsanschluss bereitgestellt und kann somit zum Beispiel in der Art eines Kondensators verwendet werden. Hierdurch wird besonders kostengünstig und platzsparend eine weitere Filterung des Signals ermöglicht, um störende Frequenzen zu unterdrücken.

Optional ist es denkbar, dass der jeweilige Empfangspfad als einziges elektrisches Bauelement wenigstens eines der Widerstandselemente aufweist, wobei vorzugsweise das jeweils andere Widerstandselement in einem vom Empfangspfad abzweigenden Pfad integriert ist. Die Pfade können somit jeweils einem Stromzweig entsprechen. Der jeweilige Empfangspfad ist insbesondere ein Empfängerzweig, und der jeweilige Sendepfad ist insbesondere ein Senderzweig. Jeder dieser Stromzweige kann ein möglicher Weg sein, welchen der Strom nehmen kann, das heißt in welchem ein Stromfluss stattfinden kann. Da gegebenenfalls lediglich ein Spannungsteiler aus zwei Widerstandselementen pro Empfangspfad notwendig ist, können die Kosten bei der Herstellung deutlich reduziert werden.

Vorteilhafterweise kann bei der Erfindung vorgesehen sein, dass die wenigstens zwei Widerstandselemente einen Spannungsteiler ausbilden, um das Empfangssignal (zum Beispiel einen Spannungswert des Empfangssignals) am Empfangsanschluss einzustellen. Vorteilhafterweise kann der Spannungsteiler ein Verhältnis von 22:1 und/oder maximal (10 bis 30) : 1 aufweisen. In anderen Worten kann eines der Widerstandselemente (zum Beispiel ein erstes oder zweites Widerstandselement) einen 10 bis 30-fachen, vorzugsweise 22-fachen Widerstandswert des anderen (zweiten beziehungsweise ersten) Widerstandselements aufweisen. Auf diese Weise kann die Auskoppelung zuverlässig erfolgen und insbesondere ein Verluststrom reduziert werden.

Bevorzugt sind die Widerstandselemente jeweils als zweipoliges passives elektrisches Bauelement zur Realisierung eines ohmschen Widerstandes ausgebildet, zum Beispiel als bedrahteter Widerstand oder als Widerstand in SMD-Bauweise. Das Empfangssignal ist zum Beispiel ein elektrisches Signal, wie eine elektrische Spannung oder dergleichen.

Gemäß einem weiteren Vorteil kann vorgesehen sein, dass jeweils einer der Widerstandselemente mit einem festen Potential, vorzugsweise mit einem Massepotential oder einem von dem Massepotential abweichenden Potential, bevorzugt des Verarbeitungsmittels, (insbesondere direkt und/oder unmittelbar) verbunden ist, um einen Spannungsteiler gegen das feste Potential zu bilden. Das feste Potential kann beispielsweise (im Wesentlichen) 0,9 V sein, welches insbesondere durch das Verarbeitungsmittel, bevorzugt durch eine Empfängerstufe bereitgestellt wird. Beispielweise ist einer der Widerstandselemente direkt mit dem festen Potential und das andere der Widerstandselemente direkt mit dem Empfangsanschluss verbunden. Auf diese Weise kann eine kompakte und kostengünstige Verschaltung bereitgestellt werden.

Vorteilhafterweise kann im Rahmen der Erfindung vorgesehen sein, dass (jeweils) die Widerstandselemente (eines Spannungsteilers) miteinander elektrisch verbunden sind, und ausgehend von dieser Verbindung zwischen den Widerstandselementen der Empfangspfad direkt zum Empfangsanschluss führt, um das Empfangssignal in Abhängigkeit von einer an der Antenne abgegriffenen (Antennen-) Spannung am Empfangsanschluss einzustellen. Die abgegriffene Spannung an der Antenne beträgt zum Beispiel 30 V, sodass die Widerstandselemente hochohmig ausgeführt sein können, sodass der Verluststrom reduziert werden kann.

Ein weiterer Vorteil kann im Rahmen der Erfindung erzielt werden, wenn im jeweiligen Sendepfad ein Kopplungskondensator vorgesehen ist, um zum Beispiel eine Bandbreite einer Filterschaltung der Vorrichtung einzustellen, wobei jeweils der Kopplungskondensator in einem Pfad zwischen dem Empfangsanschluss und dem Sendeanschluss integriert sein kann, um Störsignale zu reduzieren und/oder einen Stromfluss vom Empfangspfad in den Sendepfad zu verhindern. Die Filterschaltung ist beispielsweise als Bandfilter ausgeführt, so dass eine Kommunikationsfrequenz durchgelassen und/oder Frequenzen außerhalb der Kommunikationsfrequenz abgeschwächt werden. Die Kommunikationsfrequenz beträgt beispielsweise 13,56 MHz. Auf diese Weise kann zuverlässig eine kontaktlose Datenübertragung bereitgestellt werden.

Weiter ist im Rahmen der Erfindung denkbar, dass zwei Empfangspfade symmetrisch den jeweiligen Empfangsanschluss mit der Antenne verbinden, wobei vorzugsweise zwei Sendepfade symmetrisch den jeweiligen Sendeanschluss mit der Antenne verbinden, um eine symmetrische Signalübertragung der Signale zwischen der Antenne und dem Verarbeitungsmittel bereitzustellen, sodass vorzugsweise eine Anzahl der Widerstandselemente, welche in den (sämtlichen) Empfangspfaden integriert sind, insgesamt wenigstens zwei beträgt und/oder die Anzahl der Widerstandselemente, welche an den Empfangspfaden vorgesehen sind, insgesamt wenigstens vier beträgt, um die Empfangssignale an den jeweiligen Empfangsanschlüssen einzustellen. Die symmetrische Signalübertragung gewährleistet dabei eine zuverlässige und fehlerfreie Datenübertragung.

Optional kann es vorgesehen sein, dass eine Filterschaltung an dem wenigstens einen Sendepfad vorgesehen ist, um eine Bandpassfilterung bereitzustellen. Die Bandpassfilterung dient insbesondere dazu, einen Frequenzbereich um eine Mittenfrequenz der Filterschaltung durchzulassen und davon abweichende Frequenzen abzuschwächen. Die Breite dieses Frequenzbereiches wird insbesondere durch die Bandbreite der Filterschaltung definiert. Somit kann die Kommunikation zuverlässig gewährleistet werden.

Ferner ist es optional möglich, dass eine Filterschaltung vorgesehen ist, wobei die Filterschaltung, vorzugsweise eine jeweilige Filteranordnung, als Bandpassfilter mit einer Mittenfrequenz für eine NFC-Frequenz, vorzugsweise von zumindest nahezu 13,56 MHz ausgeführt ist. Die Bandbreite kann zum Beispiel 1 bis 10 MHz betragen. Hierdurch wird eine zuverlässige Datenübertragung mittels NFC ermöglicht.

Des Weiteren ist es im Rahmen der Erfindung optional möglich, dass die Antenne als Nahfeldübertragungs-Spule ausgebildet ist. Auch dies ermöglicht eine kontaktlose Datenübertragung zum Beispiel mittels loser gekoppelter Spulen. Als Kommunikationsteilnehmer dieser Datenübertragung kann beispielsweise ein mobiles Gerät, wie ein ID-Geber und/oder Smartphone, genutzt werden.

Vorzugsweise kann vorgesehen sein, dass die Antenne auf einer Leiterplatte als PCB-Antenne ausgebildet ist. PCB steht hierbei für Printed Circuit Board. Es kann sich also um eine gedruckte Antenne handeln, um somit eine möglichst platzsparende Ausbildung der Vorrichtung zu ermöglichen.

Es kann weiter möglich sein, dass jeweils ein Verhältnis eines ersten Widerstandselements zu einem zweiten Widerstandselement im Bereich von 10 bis 50, vorzugsweise 15 bis 25, bevorzugt 20 bis 24, besonders bevorzugt bei im Wesentlichen 22 liegt. Dies kann sowohl für das erste und zweite Widerstandselement (eines ersten Spannungsteilers) bei einem ersten Empfangspfad und optional für das erste und zweite Widerstandselement (eines zweiten Spannungsteilers) bei einem zweiten Empfangspfad gelten. Damit wird eine besonders energieeffiziente Auskoppelung des Empfangssignals ermöglicht.

Ferner kann es im Rahmen der Erfindung vorgesehen sein, dass wenigstens eines der Widerstandselemente, vorzugsweise ein erstes und/oder zweites Widerstandselement, einen elektrischen Widerstand in Höhe von wenigstens 5 kOhm, vorzugsweise mindestens 10 kOhm aufweist. Hierdurch kann der Verluststrom deutlich reduziert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
Fig. 1 eine schematische Seitenansicht eines Fahrzeuges mit einer erfindungsgemäßen Vorrichtung,
Fig. 2 ein schematisches Schaltbild einer erfindungsgemäßen Vorrichtung.

In den nachfolgenden Figuren werden für die gleichen technischen Merkmale auch von unterschiedlichen Ausführungsbeispielen die identischen Bezugszeichen verwendet.

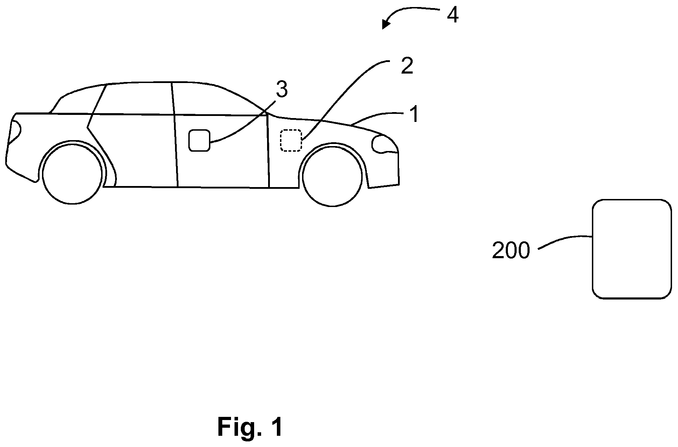

In Fig. 1 ist schematisch ein Fahrzeug 1 in einer Seitenansicht gezeigt. Das Fahrzeug kann hierbei eine Fahrzeugelektronik 2 aufweisen, welche beispielsweise ein Sicherheitssystem 4 des Fahrzeuges bereitstellt. Ferner kann eine Fahrzeugkomponente 3, wie ein Türgriff 3, am Fahrzeug vorgesehen sein. Eine erfindungsgemäße Vorrichtung 10, insbesondere eine NFC-Schnittstellenvorrichtung 10, kann hierbei in der Fahrzeugkomponente 3 integriert sein. Dies ermöglicht es, über eine kontaktlose Datenübertragung zum Beispiel von einem mobilen Gerät 200 an die erfindungsgemäße Vorrichtung 10 eine Funktion am Fahrzeug zu aktivieren. Hierzu können beispielsweise die Daten Authentifizierungsdaten sein, welche nach dem Empfang von dem Gerät 200 von der erfindungsgemäßen Vorrichtung 10 an die Fahrzeugelektronik 2 übermittelt werden. Sodann können die Authentifizierungsdaten zum Beispiel mit einer Vorgabe verglichen werden, zum Beispiel mit einem geheimen Code, um das mobile Gerät 200 zu authentifizieren.

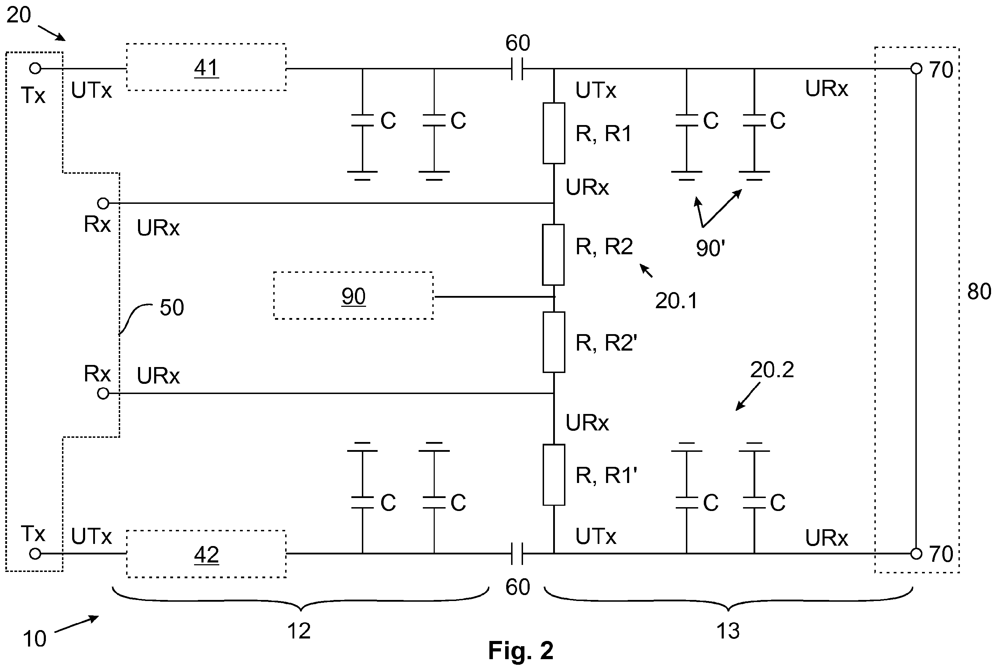

In Fig. 2 ist ein schematisches Schaltbild einer erfindungsgemäßen Vorrichtung 10 für ein Fahrzeug 1 gezeigt, welche zur kontaktlosen Datenübertragung zwischen dem Fahrzeug 1 und einem mobilen Gerät 200 dient. Vorzugsweise handelt es sich bei der Datenübertragung um eine Kommunikation, bevorzugt NFC-Kommunikation, des Fahrzeuges 1 mit dem mobilen Gerät 200, wie einem Identifikationsgeber 200. Auf diese Weise können zuverlässig Daten, wie Authentifizierungsdaten, von dem mobilen Gerät 200 an das Fahrzeug 1 übertragen werden. Der Identifikationsgeber 200 dient hierbei insbesondere zur Authentifizierung und kann zum Beispiel auch durch ein Smartphone oder Mobilfunkgerät oder dergleichen bereitgestellt werden.

Es kann dabei die erfindungsgemäße Vorrichtung 10 eine Schaltung aufweisen, welche wenigstens eine elektronische Komponente aufweist. Die elektronische(n) Komponente(n) sind zum Beispiel auf einer Leiterplatte mit Leiterbahnen verbunden. Die Leiterbahnen können hierbei Strompfade ausbilden, um die Komponenten miteinander zu verschalten. Beispielhaft ist in Fig. 2 ein Schaltbild für eine solche Verschaltung schematisch dargestellt.

Es kann wenigstens ein elektronisches Verarbeitungsmittel 50 für die Datenübertragung bei der erfindungsgemäßen Vorrichtung 10 vorgesehen sein. Außerdem kann wenigstens ein Sendepfad UTx genutzt werden, welcher einen jeweiligen Sendeanschluss Tx des Verarbeitungsmittels 50 mit einer Antenne 80 verbindet, um zumindest ein Sendesignal bereitzustellen. Auch kann wenigstens ein Empfangspfad URx genutzt werden, welcher die Antenne 80 mit einem jeweiligen Empfangsanschluss Rx des Verarbeitungsmittels 50 verbindet, um zumindest ein Empfangssignal zu erfassen. Es können jeweils bei dem Empfangspfad URx wenigstens zwei Widerstandselemente R vorgesehen sein, um das Empfangssignal am Empfangsanschluss Rx einzustellen. Dabei kann einer der Widerstandselemente R beim jeweiligen Empfangspfad URx direkt mit der Antenne 80 verbunden sein, um das Empfangssignal direkt an der Antenne abzugreifen. Vorliegend besteht die direkte Verbindung in einer Verbindung mit elektrischen Anschlusspunkten 70 bzw. einer Verbindungsanordnung 70 der Antenne 80. Die direkte Verbindung impliziert insbesondere, dass keine weiteren elektronischen Bauelemente zwischen der Antenne 80 insbesondere der Verbindungsanordnung 70 der Antenne 80 und einem der Widerstandselemente R in Reihe vorgesehen sind.

Auch kann es möglich sein, dass der jeweilige Empfangspfad URx als einziges elektrisches Bauelement wenigstens eines der Widerstandselemente R (vorliegend erste Widerstandselemente R1, R1') aufweist, wobei vorzugsweise das jeweils andere Widerstandselement R (vorliegende zweite Widerstandselemente R2, R2') in einem vom Empfangspfad URx abzweigenden Pfad integriert ist. Ferner können die wenigstens zwei Widerstandselemente R einen Spannungsteiler ausbilden, um das Empfangssignal am Empfangsanschluss Rx einzustellen. Jeweils einer der Widerstandselemente R, nämlich vorliegend die zweiten Widerstandselemente R2, R2', können dabei mit einem festen Potential 90, vorzugsweise mit einem Massepotential 90' oder einem von dem Massepotential 90' abweichenden Potential 90, bevorzugt des Verarbeitungsmittels 50, verbunden sein, um einen Spannungsteiler gegen das feste Potential 90 zu bilden.

Wie ebenfalls dargestellt ist, können jeweils die Widerstandselemente R miteinander elektrisch verbunden sein, und ausgehend von dieser Verbindung zwischen den Widerstandselementen R der Empfangspfad URx direkt zum Empfangsanschluss Rx führen, um das Empfangssignal in Abhängigkeit von einer an der Antenne 80 abgegriffenen Spannung am Empfangsanschluss Rx einzustellen. Im gezeigten Beispiel ist hierzu R1 mit R2 verbunden und R1' mit R2' verbunden.

Darüber hinaus ist es denkbar, dass im jeweiligen Sendepfad UTx ein Kopplungskondensator 60 vorgesehen ist, um eine Bandbreite einer Filterschaltung 20 der Vorrichtung 10 einzustellen, wobei jeweils der Kopplungskondensator 60 in einem Pfad zwischen dem Empfangsanschluss Rx und dem Sendeanschluss Tx integriert ist, um Störsignale zu reduzieren und/oder einen Stromfluss vom Empfangspfad URx in den Sendepfad UTx zu verhindern.

In Fig. 2 ist ferner vorgesehen, dass zwei Empfangspfade URx symmetrisch den jeweiligen Empfangsanschluss Rx mit der Antenne 80 verbinden, wobei zwei Sendepfade UTx symmetrisch den jeweiligen Sendeanschluss Tx mit der Antenne 80 verbinden, um eine symmetrische Signalübertragung der Signale zwischen der Antenne 80 und dem Verarbeitungsmittel 50 bereitzustellen. Entsprechend können für jeden Empfangspfad URx jeweils zwei Widerstandselemente R1, R2 und R1', R2' bzw. jeweils ein Spannungsteiler vorgesehen sein.

Es ist ferner eine Filterschaltung 20 an dem wenigstens einen Sendepfad UTx vorgesehen, um eine Bandpassfilterung bereitzustellen. So kann die Filterschaltung 20 mehrere Elektronikkomponenten, wie Kondensatoren C und/oder die Kondensatoren 60 nutzen, um eine Filterung des Sende- und/oder Empfangssignals bereitzustellen. Hierzu kann die Filterschaltung 20 eine erste Filteranordnung 20.1 und eine hierzu symmetrisch ausgebildete zweite Filteranordnung 20.2 aufweisen, jeweils zum Beispiel mit den gleichen Elektronikkomponenten nur in unterschiedlichen Empfangs- und/oder Sendepfaden. Auch kann eine erste Teilanordnung 12 und eine zweite Teilanordnung 13 pro Filteranordnung 20.1, 20.2 vorgesehen sein. Jede der Teilanordnungen 12, 13 kann zum Beispiel einen Schwingkreis ausbilden, welche jeweils durch einen Kondensator 60 miteinander gekoppelt sind, um einen Bandfilter bereitzustellen. Dazu können die Teilanordnungen 12, 13 zum Beispiel jeweils Filterglieder aufweisen. Beispielhaft gezeigt ist ein erstes Filterglied 41 der ersten Teilanordnung 12 der ersten Filteranordnung 20.1 und ein zweites Filterglied 42 der ersten Teilanordnung 12 der zweiten Filteranordnung 20.2. Die Filterglieder 41, 42 weisen jeweils bspw. ein RL-Glied (aus Widerstand und Spule) oder ein RL-Glied (aus Widerstand und Spule) auf.

Es kann ggf. wenigstens einer der Widerstandselemente R gemeinsam mit dem Verarbeitungsmittel 50, vorzugsweise einer Kapazität am Empfangsanschluss Rx, einen Tiefpassfilter ausbilden. Auch kann es möglich sein, dass die Antenne 80 als Nahfeldübertragungs-Spule und/oder als PCB-Antenne ausgebildet ist. Dadurch kann die Datenübertragung insbesondere als NFC-Datenübertragung optimiert werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung, wie sie in den Ansprüchen definiert ist, zu verlassen.

### Bezugszeichenliste

- 1: Fahrzeug
- 2: Fahrzeugelektronik
- 3: Fahrzeugkomponente, Türgriff
- 4: Sicherheitssystem

- 10: Vorrichtung, NFC-Schnittstellenvorrichtung
- 12: erste Teilanordnung, erster Schwingkreis, serieller Schwingkreis
- 13: zweite Teilanordnung, zweiter Schwingkreis, paralleler Schwingkreis

- 20: Filterschaltung
- 20.1: erste Filteranordnung
- 20.2: zweite Filteranordnung

- 41: erstes Filterglied, erstes RL-Glied
- 42: zweites Filterglied, zweites RL-Glied

- 50: Verarbeitungsmittel

- 60: Kopplungseinheit, Kopplungskondensator

- 70: Anschlusspunkt, Verbindungsanordnung

- 80: Antenne

- 90: festes Potential, Massepotential

- 200: mobiles Gerät
- 90': Massepotential
- R: Widerstandselement
- Rx: Empfangsanschluss, Receiver-Anschluss
- R1: erstes Widerstandselement
- R2: zweites Widerstandselement
- URx: Empfangspfad, Empfängerzweig
- R1': erstes symmetrisches Widerstandselement
- R2': zweites symmetrisches Widerstandselement
- Tx: Sendeanschluss, Transmitter-Anschluss
- UTx: Sendepfad, Senderzweig

## Patentansprüche

1. Vorrichtung (10) für ein Fahrzeug (1) zur kontaktlosen Datenübertragung zwischen dem Fahrzeug (1) und einem mobilen Gerät (200), vorzugsweise zur NFC-Kommunikation des Fahrzeuges (1) mit einem Identifikationsgeber (200), aufweisend:
- wenigstens ein elektronisches Verarbeitungsmittel (50) für die Datenübertragung,
- wenigstens einen Sendepfad (UTx), welcher einen jeweiligen Sendeanschluss (Tx) des Verarbeitungsmittels (50) mit einer Antenne (80) verbindet, um zumindest ein Sendesignal bereitzustellen,
- wenigstens einen Empfangspfad (URx), welcher die Antenne (80) mit einem jeweiligen Empfangsanschluss (Rx) des Verarbeitungsmittels (50) verbindet, um zumindest ein Empfangssignal zu erfassen,
wobei jeweils bei dem Empfangspfad (URx) wenigstens zwei Widerstandselemente (R) vorgesehen sind, um das Empfangssignal am Empfangsanschluss (Rx) einzustellen, wobei einer der Widerstandselemente (R) des jeweiligen Empfangspfads (URx) direkt mit der Antenne (80) verbunden ist, um das Empfangssignal direkt an der Antenne abzugreifen, und
wobei wenigstens einer der Widerstandselemente (R) gemeinsam mit dem Verarbeitungsmittel (50), vorzugsweise einer Kapazität am Empfangsanschluss (Rx), einen Tiefpassfilter ausbildet.

2. Vorrichtung (10) nach Anspruch 1,
**dadurch gekennzeichnet,**
**dass** der jeweilige Empfangspfad (URx) als einziges elektrisches Bauelement wenigstens eines der Widerstandselemente (R) aufweist, wobei vorzugsweise das jeweils andere Widerstandselement (R) in einem vom Empfangspfad (URx) abzweigenden Pfad integriert ist.

3. Vorrichtung (10) nach einem der vorhergehenden Ansprüche,
**dadurch gekennzeichnet,**
**dass** die wenigstens zwei Widerstandselemente (R) einen Spannungsteiler ausbilden, um das Empfangssignal am Empfangsanschluss (Rx) einzustellen.

4. Vorrichtung (10) nach einem der vorhergehenden Ansprüche,
**dadurch gekennzeichnet,**
**dass** jeweils einer der Widerstandselemente (R) mit einem festen Potential (90), vorzugsweise mit einem Massepotential (90') oder einem von dem Massepotential (90') abweichenden Potential (90), bevorzugt des Verarbeitungsmittels (50), verbunden ist, um einen Spannungsteiler gegen das feste Potential (90) zu bilden.

5. Vorrichtung (10) nach einem der vorhergehenden Ansprüche,
**dadurch gekennzeichnet,**
**dass** jeweils die Widerstandselemente (R) miteinander elektrisch verbunden sind, und ausgehend von dieser Verbindung zwischen den Widerstandselementen (R) der Empfangspfad (URx) direkt zum Empfangsanschluss (Rx) führt, um das Empfangssignal in Abhängigkeit von einer an der Antenne (80) abgegriffenen Spannung am Empfangsanschluss (Rx) einzustellen.

6. Vorrichtung (10) nach einem der vorhergehenden Ansprüche,
**dadurch gekennzeichnet,**
**dass** im jeweiligen Sendepfad (UTx) ein Kopplungskondensator (60) vorgesehen ist, um eine Bandbreite einer Filterschaltung (20) der Vorrichtung (10) einzustellen, wobei jeweils der Kopplungskondensator (60) in einem Pfad zwischen dem Empfangsanschluss (Rx) und dem Sendeanschluss (Tx) integriert ist, um Störsignale zu reduzieren und/oder einen Stromfluss vom Empfangspfad (URx) in den Sendepfad (UTx) zu verhindern.

7. Vorrichtung (10) nach einem der vorhergehenden Ansprüche,
**dadurch gekennzeichnet,**
**dass** zwei Empfangspfade (URx) symmetrisch den jeweiligen Empfangsanschluss (Rx) mit der Antenne (80) verbinden, wobei vorzugsweise zwei Sendepfade (UTx) symmetrisch den jeweiligen Sendeanschluss (Tx) mit der Antenne (80) verbinden, um eine symmetrische Signalübertragung der Signale zwischen der Antenne (80) und dem Verarbeitungsmittel (50) bereitzustellen.

8. Vorrichtung (10) nach einem der vorhergehenden Ansprüche,
**dadurch gekennzeichnet,**
**dass** eine Filterschaltung (20) an dem wenigstens einen Sendepfad (UTx) vorgesehen ist, um eine Bandpassfilterung bereitzustellen.

9. Vorrichtung (10) nach einem der vorhergehenden Ansprüche,
**dadurch gekennzeichnet,**
**dass** eine Filterschaltung (20) vorgesehen ist, wobei die Filterschaltung (20), vorzugsweise eine jeweilige Filteranordnung (20.1, 20.2), als Bandpassfilter mit einer Mittenfrequenz (F0) für eine NFC-Frequenz, vorzugsweise von zumindest nahezu 13,56 MHz ausgeführt ist.

10. Vorrichtung (10) nach einem der vorhergehenden Ansprüche,
**dadurch gekennzeichnet,**
**dass** die Antenne (80) als Nahfeldübertragungs-Spule ausgebildet ist.

11. Vorrichtung (10) nach einem der vorhergehenden Ansprüche,
**dadurch gekennzeichnet,**
**dass** die Antenne (80) auf einer Leiterplatte (11) als PCB-Antenne ausgebildet ist.

12. Vorrichtung (10) nach einem der vorhergehenden Ansprüche,
**dadurch gekennzeichnet,**
**dass** jeweils ein Verhältnis eines ersten Widerstandselements (R1) zu einem zweiten Widerstandselement (R2) im Bereich von 10 bis 50 ausgebildet ist, vorzugsweise 15 bis 25, bevorzugt 20 bis 24.

13. Vorrichtung (10) nach einem der vorhergehenden Ansprüche,
**dadurch gekennzeichnet,**
**dass** wenigstens eines der Widerstandselemente (R), vorzugsweise ein erstes und/oder zweites Widerstandselement (R1, R2), einen elektrischen Widerstand in Höhe von wenigstens 5 kOhm, vorzugsweise mindestens 10 kOhm aufweist.

## Claims

1. Device (10) for a vehicle (1) for contactless data transmission between the vehicle (1) and a mobile device (200), preferably for NFC communication of the vehicle (1) with an identification transmitter (200):
- at least one electronic processing means (50) for data transmission,
- at least one transmission path (UTx), which connects a respective transmission terminal (Tx) of the processing means (50) to an antenna (80) in order to provide at least one transmission signal,
- at least one receive path (URx) which connects the antenna (80) to a respective receive terminal (Rx) of the processing means (50) in order to detect at least one receive signal,
wherein at least two resistor elements (R) are provided in each case in the receive path (URx) in order to adjust the receive signal at the receive terminal (Rx), wherein one of the resistor elements (R) of the respective receive path (URx) is connected directly to the antenna (80) in order to tap the receive signal directly at the antenna, and
wherein at least one of the resistor elements (R) forms a low-pass filter together with the processing means (50), preferably a capacitance at the receiving terminal (Rx).

2. Device (10) according to claim 1,
**characterized in that**
the respective receive path (URx) has at least one of the resistor elements (R) as the only electrical component, the other resistor element (R) in each case preferably being integrated in a path branching off from the receive path (URx).

3. Device (10) according to one of the preceding claims,
**characterized in that**
the at least two resistor elements (R) form a voltage divider in order to adjust the receive signal at the receive terminal (Rx).

4. Device (10) according to one of the preceding claims,
**characterized in that**
in each case one of the resistor elements (R) is connected to a fixed potential (90), preferably to a ground potential (90') or to a potential (90) deviating from the ground potential (90'), preferably of the processing means (50), in order to form a voltage divider with respect to the fixed potential (90).

5. Device (10) according to one of the preceding claims,
**characterized in that**
the resistor elements (R) are electrically connected to one another in each case, and starting from this connection between the resistor elements (R), the receive path (URx) leads directly to the receive terminal (Rx) in order to adjust the receive signal as a function of a voltage tapped at the receive terminal (Rx) on the antenna (80).

6. Device (10) according to one of the preceding claims,
**characterized in that**
a coupling capacitor (60) is provided in the respective transmission path (UTx) in order to adjust a bandwidth of a filter circuit (20) of the device (10), the coupling capacitor (60) being integrated in a path between the receive terminal (Rx) and the transmission terminal (Tx) in each case in order to reduce interference signals and/or prevent a current flow from the receive path (URx) into the transmission path (UTx).

7. Device (10) according to one of the preceding claims,
**characterized in that**
two receive paths (URx) symmetrically connect the respective receive terminal (Rx) to the antenna (80), wherein preferably two transmission paths (UTx) symmetrically connect the respective transmission terminal (Tx) to the antenna (80) in order to provide symmetrical signal transmission of the signals between the antenna (80) and the processing means (50).

8. Device (10) according to one of the preceding claims,
**characterized in that**
a filter circuit (20) is provided on the at least one transmission path (UTx) in order to provide bandpass filtering.

9. Device (10) according to one of the preceding claims,
**characterized in that**
a filter circuit (20) is provided, the filter circuit (20), preferably a respective filter arrangement (20.1, 20.2), being designed as a bandpass filter with a center frequency (F0) for an NFC frequency, preferably of at least almost 13.56 MHz.

10. Device (10) according to one of the preceding claims,
**characterized in that**
the antenna (80) is designed as a near-field transmission coil.

11. Device (10) according to one of the preceding claims,
**characterized in that**
the antenna (80) is formed on a printed circuit board (11) as a PCB antenna.

12. Device (10) according to one of the preceding claims,
**characterized in that**
in each case a ratio of a first resistance element (R1) to a second resistance element (R2) is formed in the range from 10 to 50, preferably 15 to 25, preferably 20 to 24.

13. Device (10) according to one of the preceding claims,
**characterized in that**
at least one of the resistor elements (R), preferably a first and/or second resistor element (R1, R2), has an electrical resistance of at least 5 kOhm, preferably at least 10 kOhm.

## Revendications

1. Dispositif (10) pour un véhicule (1) pour la transmission de données sans contact entre le véhicule (1) et un appareil mobile (200), de préférence pour la communication NFC du véhicule (1) avec un transmetteur d'identification (200), présentant :
- au moins un moyen de traitement électronique (50) pour la transmission de données,
- au moins un chemin d'émission (UTx) qui relie un borne d'émission respectif (Tx) du moyen de traitement (50) à une antenne (80) pour fournir au moins un signal d'émission,
- au moins un chemin de réception (URx) reliant l'antenne (80) à une borne de réception respective (Rx) du moyen de traitement (50) pour détecter au moins un signal de réception,
au moins deux éléments de résistance (R) étant prévus respectivement pour le chemin de réception (URx), afin de régler le signal de réception sur le borne de réception (Rx), l'un des éléments de résistance (R) du chemin de réception respectif (URx) étant relié directement à l'antenne (80), afin de prélever le signal de réception directement sur l'antenne, et
dans lequel au moins l'un des éléments de résistance (R) forme un filtre passe-bas conjointement avec le moyen de traitement (50), de préférence une capacité au niveau de la borne de réception (Rx).

2. Dispositif (10) selon la revendication 1,
**caractérisé en ce que**
le chemin de réception respectif (URx) présente comme unique composant électrique au moins l'un des éléments de résistance (R), l'autre élément de résistance respectif (R) étant de préférence intégré dans un chemin bifurquant du chemin de réception (URx).

3. Dispositif (10) selon l'une des revendications précédentes,
**caractérisé en ce que**
les au moins deux éléments de résistance (R) forment un diviseur de tension pour régler le signal de réception sur la borne de réception (Rx).

4. Dispositif (10) selon l'une des revendications précédentes,
**caractérisé en ce que**
respectivement l'un des éléments de résistance (R) est relié à un potentiel fixe (90), de préférence à un potentiel de masse (90') ou à un potentiel (90) différent du potentiel de masse (90'), de préférence du moyen de traitement (50), pour former un diviseur de tension par rapport au potentiel fixe (90).

5. Dispositif (10) selon l'une des revendications précédentes,
**caractérisé en ce que**
les éléments de résistance (R) sont respectivement reliés électriquement entre eux, et à partir de cette liaison entre les éléments de résistance (R), le chemin de réception (URx) mène directement à la borne de réception (Rx) pour régler le signal de réception en fonction d'une tension prélevée sur l'antenne (80) à la borne de réception (Rx).

6. Dispositif (10) selon l'une des revendications précédentes,
**caractérisé en ce que**
dans le chemin d'émission respectif (UTx) est prévu un condensateur de couplage (60) pour régler une largeur de bande d'un circuit de filtrage (20) du dispositif (10), le condensateur de couplage (60) étant respectivement intégré dans un chemin entre la borne de réception (Rx) et la borne d'émission (Tx) pour réduire des signaux parasites et/ou empêcher un flux de courant du chemin de réception (URx) dans le chemin d'émission (UTx).

7. Dispositif (10) selon l'une des revendications précédentes,
**caractérisé en ce que**
deux chemins de réception (URx) relient symétriquement le borne de réception respectif (Rx) à l'antenne (80), de préférence deux chemins d'émission (UTx) reliant symétriquement le borne d'émission respectif (Tx) à l'antenne (80), afin de fournir une transmission de signaux symétrique des signaux entre l'antenne (80) et le moyen de traitement (50).

8. Dispositif (10) selon l'une des revendications précédentes,
**caractérisé en ce que**
un circuit de filtrage (20) est prévu sur l'au moins un chemin d'émission (UTx) pour fournir un filtrage passe-bande.

9. Dispositif (10) selon l'une des revendications précédentes,
**caractérisé en ce que**
un circuit de filtre (20) est prévu, le circuit de filtre (20), de préférence un agencement de filtre respectif (20.1, 20.2), étant réalisé sous forme de filtre passe-bande avec une fréquence centrale (F0) pour une fréquence NFC, de préférence d'au moins presque 13,56 MHz.

10. Dispositif (10) selon l'une des revendications précédentes,
**caractérisé en ce que**
l'antenne (80) est conçue comme une bobine de transmission de champ proche.

11. Dispositif (10) selon l'une des revendications précédentes,
**caractérisé en ce que**
l'antenne (80) est réalisée sur une carte de circuit imprimé (11) sous forme d'antenne PCB.

12. Dispositif (10) selon l'une des revendications précédentes,
**caractérisé en ce que**
respectivement un rapport d'un premier élément de résistance (R1) à un deuxième élément de résistance (R2) est formé dans la plage de 10 à 50, de préférence de 15 à 25, de préférence de 20 à 24.

13. Dispositif (10) selon l'une des revendications précédentes,
**caractérisé en ce qu'**
au moins un des éléments de résistance (R), de préférence un premier et/ou un deuxième élément de résistance (R1, R2), présente une résistance électrique d'au moins 5 kOhms, de préférence d'au moins 10 kOhms.
